# EUROPEAN PATENT APPLICATION

(11) **EP 3 421 723 A2**
(43) Date of publication of application: **02.01.2019**
(21) Application number: 18176857.3
(22) Date of filing: 08.06.2018
(51) Int. Cl.: F01D 5/18

(54) **AIRFOILS AND CORRESPONDING METHOD OF MANUFACTURING**

(30) Priority: 29.06.2017 US 201715638021
(71) Applicant: United Technologies Corporation, Farmington, CT 06032 (US)
(72) Inventor: MORTON, Jeffrey T., Manchester, CT Connecticut 06040 (US); QUACH, San, Southington, CT Connecticut 06489 (US)
(74) Representative: Dehns

(57) **Abstract**

An airfoil (100; 300) for a gas turbine engine (20) may comprise an airfoil body (120) having an outer diameter (OD) end (142; 342) extending between a leading edge (124; 324) and a trailing edge (126; 326) and having an ID end (132) located opposite the airfoil body (120) from the OD end (142; 342). The airfoil body (120) defines a helical skin cooling passage (158; 358) extending between the ID end (132) of the airfoil (100; 300) and the OD end (142; 342) of the airfoil (100; 300). The airfoil body (120) may further define a main body core (154; 354). The helical skin cooling passage (158; 358) may thermally shield the main body core (154; 354).

## Description

### FIELD

The present disclosure relates to cooling systems for gas turbine engines, and more specifically, to an airfoil having cooling features.

### BACKGROUND

A gas turbine engine typically includes a fan section, a compressor section, a combustor section, and a turbine section. A fan section may drive air along a bypass flow path while a compressor section may drive air along a core flow path. In general, during operation, air is pressurized in the compressor section and is mixed with fuel and burned in the combustor section to generate hot combustion gases. The hot combustion gases flow through the turbine section, which extracts energy from the hot combustion gases to power the compressor section and other gas turbine engine loads. The compressor section typically includes low pressure and high pressure compressors, and the turbine section includes low pressure and high pressure turbines. The turbine section includes multiple stages of blades and vanes. As fluid flows through the turbine section, the flow causes the blades to rotate about an axis of rotation. The vanes, positioned between each row of blades, are used to redirect the flow in order to maximize the power received by the downstream blades.

Temperatures within the turbine section may be relatively high, as the flow of fluid is received initially from the combustor section of the gas turbine engine. Cooling air may be extracted from the compressor section and used to cool the gas path components. Cooled components may include, for example, rotating blades and stator vanes in the turbine section.

### SUMMARY

An airfoil for a gas turbine engine is disclosed herein in accordance with various embodiments. An airfoil for a gas turbine engine may comprise an airfoil body having an outer diameter (OD) end extending between a leading edge and a trailing edge and having an inner diameter (ID) end located opposite the airfoil body from the OD end, the airfoil body defining a helical skin cooling passage extending between the ID end of the airfoil and the OD end of the airfoil and a main body core.

In various embodiments, the main body core may extend between the ID end of the airfoil and the OD end of the airfoil. The helical skin cooling passage may thermally shield the main body core. The helical skin cooling passage may surround the main body core. The helical skin cooling passage may be located at the leading edge of the airfoil body. The airfoil body may further define a protrusion disposed on the helical skin cooling passage. The protrusion may be configured to increase a rate of heat transfer from cooling air within the helical skin cooling passage to the airfoil body. The helical skin cooling passage may comprise a width and the protrusion may comprise a height, wherein the height is less than the width. The OD end may be disposed at a radially outer edge of the airfoil body.

An airfoil for a gas turbine engine is disclosed herein in accordance with various embodiments. An airfoil for a gas turbine engine may comprise an airfoil body having an OD end extending between a leading edge and a trailing edge and having an ID end located opposite the airfoil body from the OD end, the airfoil body defining a helical skin cooling passage extending between the ID end of the airfoil and the OD end of the airfoil and a protrusion disposed on the helical skin cooling passage.

In various embodiments, the protrusion may be configured to increase a rate of heat transfer from cooling air within the helical skin cooling passage to the airfoil body. The helical skin cooling passage may comprise a width and the protrusion may comprise a height, wherein the height is less than the width. The airfoil body may further define a main body core. The helical skin cooling passage may thermally shield the main body core. The helical skin cooling passage may surround the main body core. The helical skin cooling passage may be located at the leading edge of the airfoil body. The OD end may be disposed at a radially outer edge of the airfoil body. The helical skin cooling passage may comprise at least one of a circular, elliptical, or racetrack geometry.

A method of manufacturing an airfoil is disclosed herein, in accordance with various embodiments. The method of manufacturing an airfoil may comprise forming a helical skin cooling passage to extend between an ID end of the airfoil and an OD end of the airfoil, and forming a main body core to extend between the ID end of the airfoil and the OD end of the airfoil, wherein the helical skin cooling passage surrounds the main body core.

In various embodiments, the method may further comprise forming a protrusion to extend from the helical skin cooling passage.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and nonlimiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the figures, wherein like numerals denote like elements.
FIG. 1 illustrates a cross-sectional view of an exemplary gas turbine engine, in accordance with various embodiments;
FIG. 2 illustrates a cross-sectional view of an engine section of gas turbine engine, according to various embodiments;
FIGs. 3A, 3B, and 3C illustrate a cooling system for an airfoil, in accordance with various embodiments;
FIG. 3D illustrates a perspective sectional view of the airfoil of FIG. 3A, in accordance with various embodiments;
FIG. 4A illustrates a section view of a helical skin cooling passage having a plurality of protrusions, in accordance with various embodiments;
FIG. 4B illustrates a cross section view of the helical skin cooling passage of FIG. 4A, in accordance with various embodiments;
FIG. 4C illustrates an axial cross section view of the helical skin cooling passage of FIG. 4B, in accordance with various embodiments;
FIG. 5A and FIG. 5B illustrate cross section views of the helical skin cooling passages with respect to a main body core, in accordance with various embodiments; and
FIG. 6 illustrates a method of manufacturing an airfoil, in accordance with various embodiments.

### DETAILED DESCRIPTION

All ranges and ratio limits disclosed herein may be combined. It is to be understood that unless specifically stated otherwise, references to "a," "an," and/or "the" may include one or more than one and that reference to an item in the singular may also include the item in the plural.

The detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that logical, chemical, and mechanical changes may be made without departing from the spirit and scope of the disclosure. Thus, the detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full, and/or any other possible attachment option. Any reference related to fluidic coupling to serve as a conduit for cooling airflow and the like may include permanent, removable, temporary, partial, full, and/or any other possible attachment option. Additionally, any reference to without contact (or similar phrases) may also include reduced contact or minimal contact. Cross hatching lines may be used throughout the figures to denote different parts but not necessarily to denote the same or different materials.

As used herein, "aft" refers to the direction associated with the exhaust (e.g., the back end) of a gas turbine engine. As used herein, "forward" refers to the direction associated with the intake (e.g., the front end) of a gas turbine engine.

A first component that is "radially outward" of a second component means that the first component is positioned at a greater distance away from the engine central longitudinal axis than the second component. A first component that is "radially inward" of a second component means that the first component is positioned closer to the engine central longitudinal axis than the second component. In the case of components that rotate circumferentially about the engine central longitudinal axis, a first component that is radially inward of a second component rotates through a circumferentially shorter path than the second component. The terminology "radially outward" and "radially inward" may also be used relative to references other than the engine central longitudinal axis. A first component that is "radially outward" of a second component means that the first component is positioned at a greater distance away from the engine central longitudinal axis than the second component. As used herein, "distal" refers to the direction outward, or generally, away from a reference component. As used herein, "proximal" refers to a direction inward, or generally, towards the reference component.

The next generation turbofan engines are designed for higher efficiency and use higher pressure ratios and higher temperatures in the high pressure compressor than are conventionally experienced. These higher operating temperatures and pressure ratios create operating environments that cause thermal loads that are higher than the thermal loads conventionally experienced, which may shorten the operational life of current components.

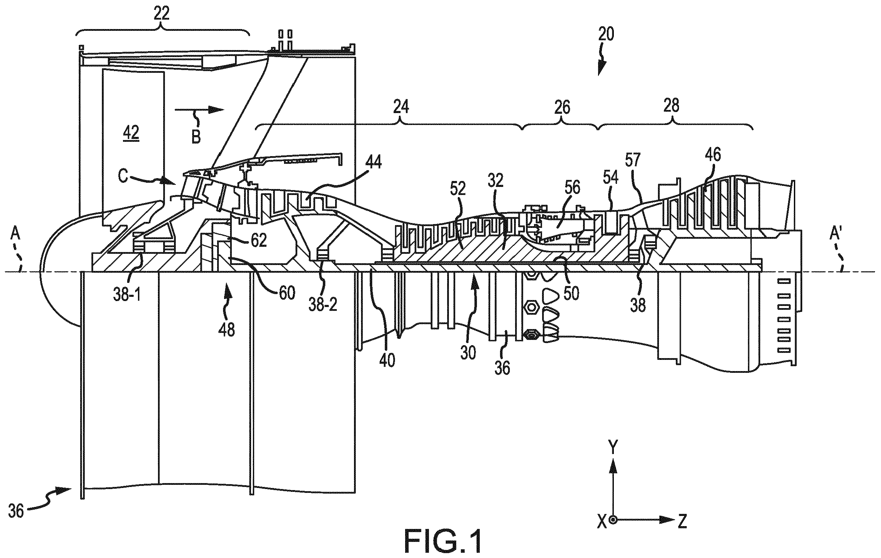

With reference to FIG. 1, a gas turbine engine 20 is shown according to various embodiments. Gas turbine engine 20 may be a two-spool turbofan that generally incorporates a fan section 22, a compressor section 24, a combustor section 26 and a turbine section 28. Alternative engines may include, for example, an augmentor section among other systems or features. In operation, fan section 22 can drive coolant (e.g., air) along a path of bypass airflow B while compressor section 24 can drive coolant along a core flow path C for compression and communication into combustor section 26 then expansion through turbine section 28. Although depicted as a turbofan gas turbine engine 20 herein, it should be understood that the concepts described herein are not limited to use with turbofans as the teachings may be applied to other types of turbine engines including three-spool architectures.

Gas turbine engine 20 may generally comprise a low speed spool 30 and a high speed spool 32 mounted for rotation about an engine central longitudinal axis A-A' relative to an engine static structure 36 or engine case via several bearing systems 38, 38-1, and 38-2. Engine central longitudinal axis A-A' is oriented in the Z direction on the provided X-Y-Z axes. It should be understood that various bearing systems 38 at various locations may alternatively or additionally be provided, including for example, bearing system 38, bearing system 38-1, and bearing system 38-2.

Low speed spool 30 may generally comprise an inner shaft 40 that interconnects a fan 42, a low pressure compressor 44 and a low pressure turbine 46. Inner shaft 40 may be connected to fan 42 through a geared architecture 48 that can drive fan 42 at a lower speed than low speed spool 30. Geared architecture 48 may comprise a gear assembly 60 enclosed within a gear housing 62. Gear assembly 60 couples inner shaft 40 to a rotating fan structure. High speed spool 32 may comprise an outer shaft 50 that interconnects a high pressure compressor 52 and high pressure turbine 54. A combustor 56 may be located between high pressure compressor 52 and high pressure turbine 54. A mid-turbine frame 57 of engine static structure 36 may be located generally between high pressure turbine 54 and low pressure turbine 46. Mid-turbine frame 57 may support one or more bearing systems 38 in turbine section 28. Inner shaft 40 and outer shaft 50 may be concentric and rotate via bearing systems 38 about the engine central longitudinal axis A-A', which is collinear with their longitudinal axes. As used herein, a "high pressure" compressor or turbine experiences a higher pressure than a corresponding "low pressure" compressor or turbine.

The core airflow may be compressed by low pressure compressor 44 then high pressure compressor 52, mixed and burned with fuel in combustor 56, then expanded over high pressure turbine 54 and low pressure turbine 46. Turbines 46, 54 rotationally drive the respective low speed spool 30 and high speed spool 32 in response to the expansion.

Gas turbine engine 20 may be, for example, a high-bypass ratio geared aircraft engine. In various embodiments, the bypass ratio of gas turbine engine 20 may be greater than about six (6). In various embodiments, the bypass ratio of gas turbine engine 20 may be greater than ten (10). In various embodiments, geared architecture 48 may be an epicyclic gear train, such as a star gear system (sun gear in meshing engagement with a plurality of star gears supported by a carrier and in meshing engagement with a ring gear) or other gear system. Geared architecture 48 may have a gear reduction ratio of greater than about 2.3 and low pressure turbine 46 may have a pressure ratio that is greater than about five (5). In various embodiments, the bypass ratio of gas turbine engine 20 is greater than about ten (10:1). In various embodiments, the diameter of fan 42 may be significantly larger than that of the low pressure compressor 44, and the low pressure turbine 46 may have a pressure ratio that is greater than about five (5:1). Low pressure turbine 46 pressure ratio may be measured prior to inlet of low pressure turbine 46 as related to the pressure at the outlet of low pressure turbine 46 prior to an exhaust nozzle. It should be understood, however, that the above parameters are exemplary of various embodiments of a suitable geared architecture engine and that the present disclosure contemplates other gas turbine engines including direct drive turbofans. A gas turbine engine may comprise an industrial gas turbine (IGT) or a geared aircraft engine, such as a geared turbofan, or non-geared aircraft engine, such as a turbofan, or may comprise any gas turbine engine as desired.

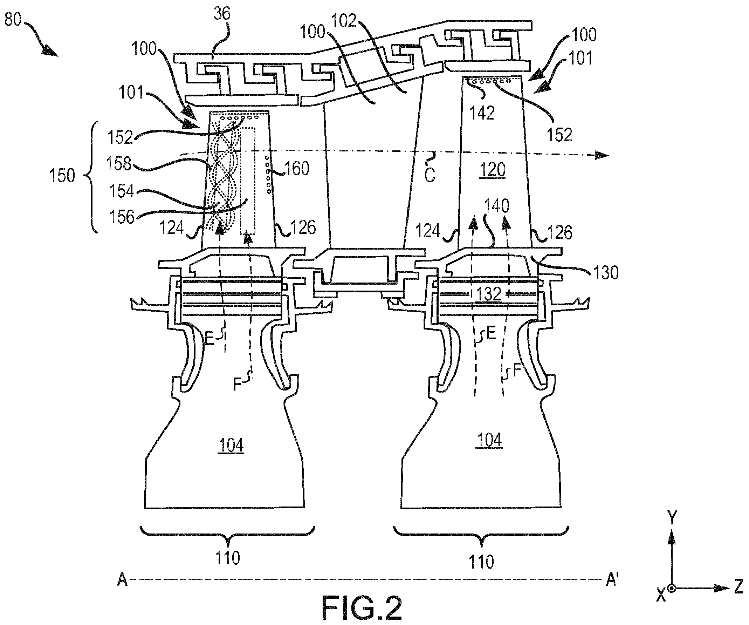

Referring now to FIG. 2 and still to FIG. 1, according to various embodiments, each of low pressure compressor 44, high pressure compressor 52, low pressure turbine 46, and high pressure turbine 54 in gas turbine engine 20 may comprise one or more stages or sets of rotating blades and one or more stages or sets of stationary vanes axially interspersed with the associated blade stages but non-rotating about engine central longitudinal axis A-A'. The compressor and turbine sections 24, 28 may be referred to as rotor assemblies 110. Each compressor stage and turbine stage may comprise multiple interspersed stages of blades 101 and vanes 102. Within the rotor assemblies 110 of gas turbine engine 20 are multiple rotor disks, which may include one or more cover plates or minidisks. The blades 101 rotate about engine central longitudinal axis A-A', while the vanes 102 remain stationary with respect to engine central longitudinal axis A-A'. For example, FIG. 2 schematically shows, by example, a portion of an engine section 80, which is illustrated as a turbine section 28 of gas turbine engine 20. It will be understood that the cooling systems in the present disclosure are not limited to the turbine section, and could extend to other sections of the gas turbine engine 20, including but not limited to compressor section 24.

Engine section 80 may include alternating rows of blades 101 and vanes 102 comprising airfoils that extend into the core flow path C. For example, the rotor assemblies can carry a plurality of rotating blades 101, while each vane assembly can carry a plurality of vanes 102 that extend into the core flow path C. Blades 101 create or extract energy (in the form of pressure) from the core airflow that is communicated through the gas turbine engine 20 along the core flow path C. Vanes 102 direct the core airflow to the blades 101 to either add or extract energy. Vanes 102 may be arranged circumferentially about engine central longitudinal axis A-A'. In various embodiments, a set of blades 101 may be coupled about a circumference of a generally circular disk 104, which may be disposed radially inward of core flow path C. Disk 104 with blades 101 may comprise a rotor assembly 110 configured to rotate about engine central longitudinal axis A-A'. Blades 101 and vanes 102 may generally be referred to as airfoils 100. Each airfoil 100, illustrated as blade 101, has an airfoil body 120 having a leading edge 124 facing a forward direction in the gas turbine engine and a trailing edge 126 facing an aft direction. An airfoil 100 may include a pressure side wall (i.e. having a generally concave surface) and a suction side wall (i.e. having a generally convex surface) joined together at the respective leading edge 124 and trailing edge 126. Each blade 101 may include a platform 130 and/or an inner diameter (ID) end 132 disposed at an inner diameter 140 of an airfoil body 120. For example, the airfoil body 120 may extend radially outward from platform 130 and/or ID end 132 at inner diameter 140 to an OD end 142. Airfoil body 120, platform 130 and ID end 132 may be integrally formed. As used herein, the term "integrated" or "integral" may include forming one, single continuous piece. Casting may be used to form airfoils 100 of FIG. 2. Although described herein with reference to blade 101, it is contemplated herein that the cooling system, as described herein, may be useful for cooling vane 102. In this regard, the term "airfoil," as used herein, may refer to either a turbine blade or a turbine vane, in accordance with various embodiments. In addition to blades and vanes, it is contemplated herein that the cooling system, as described herein, may be used for other actively cooled components of a gas turbine engine.

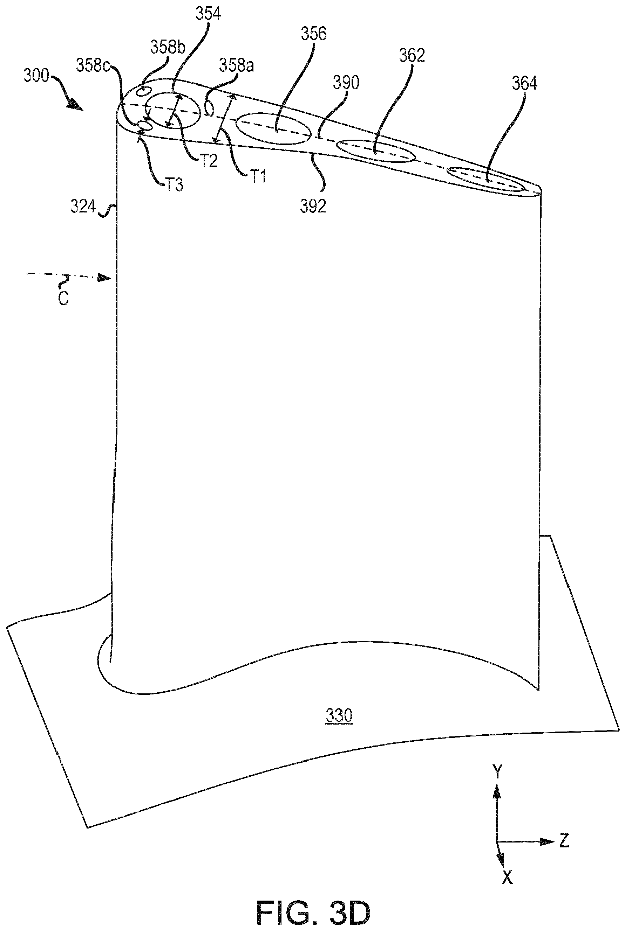

In various embodiments, an airfoil 100 may be an internally cooled component of gas turbine engine 20. An airfoil 100 may comprise a cooling system 150 having at least one helical skin cooling passage 158, i.e., at least one internal helical airflow path. In various embodiments, cooling system 150 further comprises a main body core (also referred to herein as a first main body core) 154. Main body core 154 may be located at the leading edge 124 of airfoil 100 and may be referred to herein as a leading edge main body core. A main body core may comprise a central core. In this regard, main body core 154 may comprise a circumferential thickness (e.g., thickness T2) measured normal to the camber line 390 which is greater than 25% of the total thickness (e.g., thickness T1) of airfoil 100 measured normal to the mean camber line 390, measured at the same location along mean camber line 390, with momentary reference to FIG. 3D. In various embodiments, a centerline of main body core 154 may be aligned with the camber line 390 of airfoil 100. In various embodiments, cooling system 150 further comprises a main body core (also referred to herein as a second main body core) 156. Main body core 156 may be located aft of main body core 154. In various embodiments, cooling system 150 may be configured to provide multiple airflow paths to deliver cooling airflow to an airfoil 100. With brief reference to FIG. 1, the airflow may originate from any suitable source in gas turbine engine 20. For example, the airflow may comprise air received from a compressor section of gas turbine engine 20.

In various embodiments, airfoil body 120 may define main body core 154, which directs airflow and further defines airflow path E. Airflow path E defined by main body core 154 of airfoil body 120 is oriented generally in a direction radially outward from platform 130 and ID end 132 toward OD end 142 (i.e., a radial direction when airfoil 100 is installed in a turbine). Airfoil 100 may contain multiple cooling passages or airflow paths, such as airflow path E and airflow path F, oriented in various directions. In various embodiments, airflow path E may be directed through airfoil 100 and may exit at or near the OD end 142 of airfoil 100 through a plurality of holes or outlets 152 defined in the OD end 142 of airfoil 100. Airflow path F may be directed through airfoil 100 and may exit at or near the OD end 142 of airfoil 100 through a plurality of holes or outlets 152 defined in the OD end 142 of airfoil 100 and/or may exit the trailing edge 126 of airfoil 100 through a plurality of holes or outlets 160 defined in the trailing edge 126 of airfoil 100.

Airfoil 100 may be made from a material such as a metal or metal alloy. Airfoil 100 may be made from an austenitic nickel-chromium-based alloy or other materials capable of withstanding exhaust temperatures.

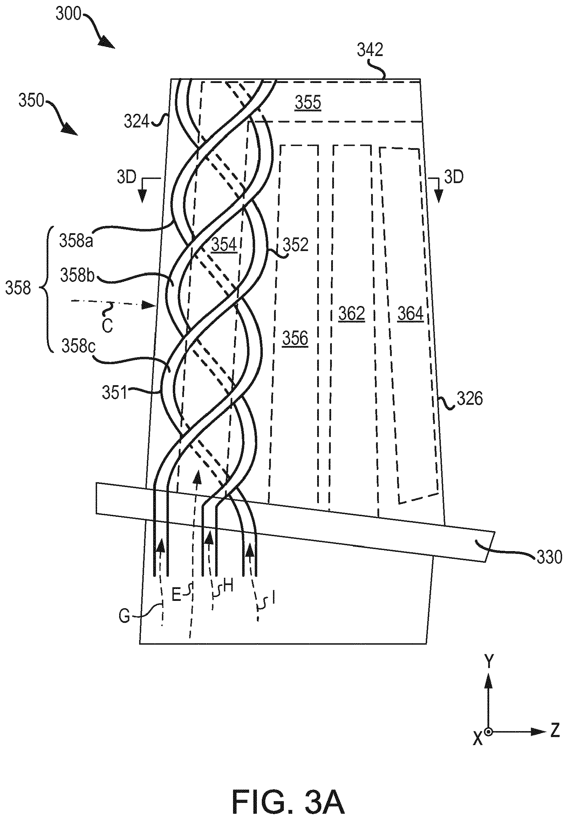

With reference to FIG. 3A and FIG. 3D, an airfoil 300 is illustrated, in accordance with various embodiments. In various embodiments, airfoil 100 may be similar to airfoil 300, with momentary reference to FIG. 2. Airfoil 300 may comprise a leading edge 324, a trailing edge 326, and an OD end 342. In various embodiments, airfoil 300 may comprise a cooling system 350 having a plurality of helical skin cooling passages 358, depicted as first helical skin cooling passage 358a, second helical skin cooling passage 358b, and third helical skin cooling passage 358c in the illustrated embodiment. In various embodiments, cooling system 350 further comprises a main body core (also referred to herein as a first main body core) 354. Main body core 354 may be located at the leading edge 324 of airfoil 300 and may be referred to herein as a leading edge main body core. Plurality of helical skin cooling passages 358 may surround main body core 354. Stated differently, plurality of helical skin cooling passages 358 may wrap around main body core 354. Main body core 354 may direct airflow and may define airflow path E. First helical skin cooling passage 358a may direct airflow and may define airflow path G. Second helical skin cooling passage 358b may direct airflow and may define airflow path H. Third helical skin cooling passage 358c may direct airflow and may define airflow path I. Airflow path E, airflow path G, airflow path H, and airflow path I may be physically separate airflow paths.

In various embodiments, the term skin cooling passage, as used herein, may refer to a passage, or core, that exists between a main body core (e.g., a central core) and an external surface 392 of an airfoil. In various embodiments, the term skin cooling passage, as used herein, may refer to a passage, or core, that extends primarily in the radial direction (i.e., the Y-direction). Each helical skin cooling passage 358 may comprise a thickness T3 measured normal to mean camber line 390 that is less than 25% of the total thickness T1 measured normal to mean camber line 390 of airfoil 300 at the same location of the mean camber line 390. In various embodiments, the thickness T3 may be greater than 10% of the total thickness T1, measured at the same location of the mean camber line 390. In various embodiments, the closest distance between external surface 392 and each helical skin cooling passage 358 may be between 5% and 15% of thickness T1. In various embodiments, the closest distance between each helical skin cooling passage 358 may be between 5% and 15% of thickness T1. In various embodiments, the above conditions may be met by measuring the dimensions along a single radial span (i.e., within a single plane normal to the Y-direction) of the airfoil 300.

In various embodiments, main body core 354 comprises a tip flag 355. Tip flag 355 may comprise a portion of main body core 354 extending axially aft at the OD end 342 of airfoil 300. Main body core 354 may direct cooling air to OD end 342 via tip flag 355. In various embodiments, cooling system 350 further comprises a main body core (also referred to herein as a second main body core) 356. Main body core 356 may be located aft of main body core 354. In various embodiments, cooling system 350 further comprises a main body core (also referred to herein as a third main body core) 362 and 350 further comprises a main body core (also referred to herein as a fourth main body core) 364. Main body core 362 may be located aft of main body core 356. Main body core 364 may be located aft of main body core 362.

In various embodiments, heat from core flow path C may be transferred to leading edge 324 of airfoil 300. With particular focus on third helical skin cooling passage 358c, this heat may be transferred from leading edge 324 to third helical skin cooling passage 358c at a forward portion (also referred to herein as a forward bend) 351 of third helical skin cooling passage 358c. This heat may then be transferred, via airflow path I, to an aft portion (also referred to herein as an aft bend) 352 of third helical skin cooling passage 358c. Said heat may be transferred from aft bend 352 to main body core 356.

Although having described transfer of heat from core flow path C, around main body core 354, to an aft bend 352 of third helical skin cooling passage 358c, it should be understood that first helical skin cooling passage 358a and second helical skin cooling passage 358b may transfer heat from core flow path C, around main body core 354, to respective aft bends of first helical skin cooling passage 358a and second helical skin cooling passage 358b in a similar manner as third helical skin cooling passage 358c. In this regard, plurality of helical skin cooling passages 358 may thermally shield main body core 354. Thus, plurality of helical skin cooling passages 358 may reduce the temperature of cooling air flowing through airflow path E and thus reduce the temperature of cooling air reaching OD end 342, via airflow path E. Stated differently, plurality of helical skin cooling passages 358 may thermally shield cooling air in airflow path E from heat transferred from core flow path C before reaching OD end 342.

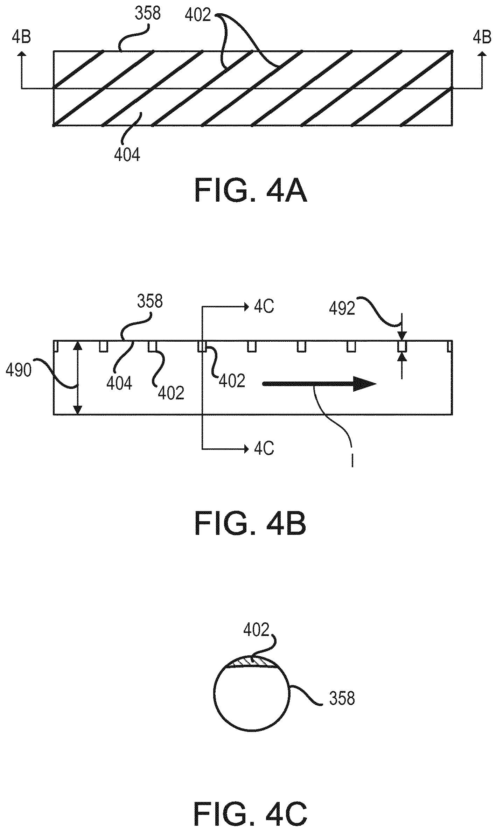

With combined reference to FIG. 4A, FIG. 4B, and FIG. 4C, a helical skin cooling passage 358 is illustrated having a plurality of protrusions 402 extending into airflow path I, in accordance with various embodiments. In various embodiments, protrusions 402 may comprise a helical geometry. Thus, protrusions 402 may comprise helically extending ridges disposed on an inner surface 404 of helical skin cooling passage 358. Protrusions 402 may wrap around helical skin cooling passage 358 in a helical manner. Helical skin cooling passage 358 may comprise a width 490. Protrusions 402 may comprise a height 492. Height 492 may be less than width 490. Protrusions 402 may increase the surface area of inner surface 404 to assist in heat transfer from airflow path I to airfoil body 120, with momentary reference to FIG. 2. Stated differently, protrusions 402 may be configured to increase the rate of heat transfer from cooling air within helical skin cooling passage 358 to airfoil body 120 by virtue of the increased surface area.

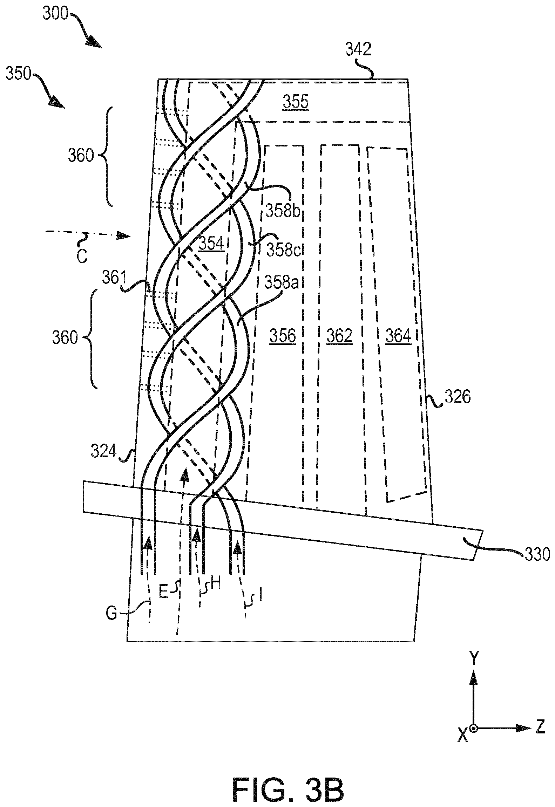

With reference to FIG. 3B, main body core 354 may supply cooling air to a plurality of leading edge cooling holes 360, such as leading edge cooling hole 361 for example. Leading edge cooling holes 360 may extend between main body core 354 and leading edge 324 of airfoil 300 for providing cooling air from airflow path E to the leading edge 324 portion of airfoil 300. Cooling holes 360 may extend between main body core 354 and leading edge 324 without intersecting helical skin cooling passages 358.

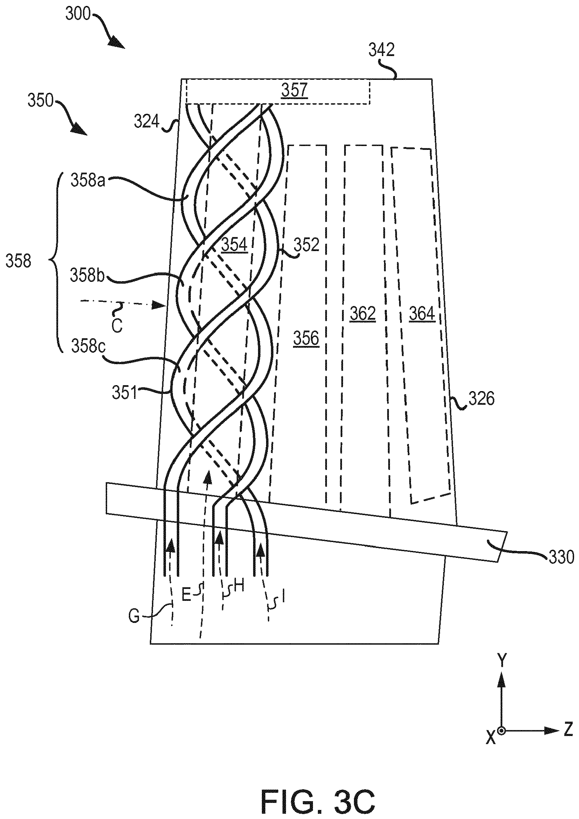

With reference to FIG. 3C, a squealer pocket 357 may be disposed at the OD end 342 of airfoil 300. Squealer pocket 357 may form a closed radial recess in OD end 342 of airfoil 300, extending axially between leading edge 324 and trailing edge 326, between a pressure sidewall and suction sidewall of airfoil 300. Squealer pocket 357 may maintain a region or pocket of cooling air along OD end 342 of airfoil 300, between the pressure sidewall and the suction sidewall of airfoil 300. The pocket of cooling air may provide a more uniform cooling temperature along OD end 342, for better oxidation resistance, reduced erosion and reduced incidence of burn-through.

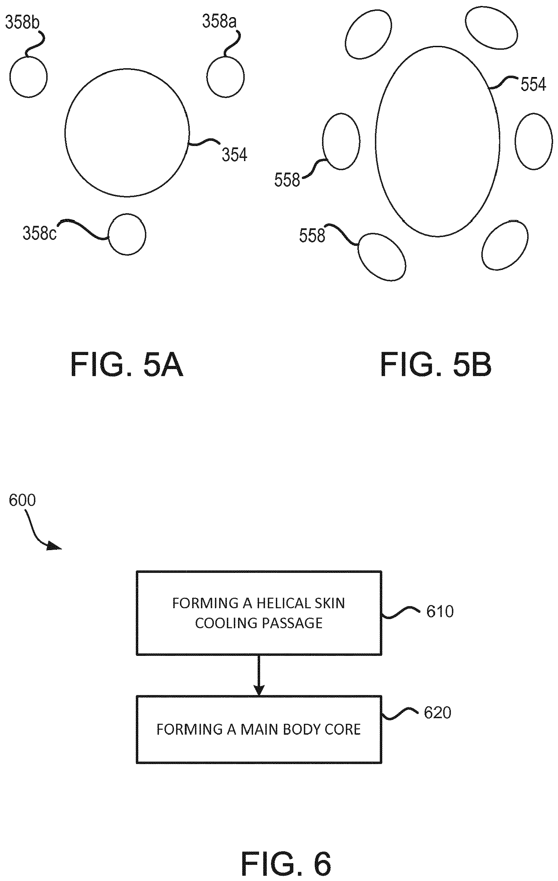

With reference to FIG. 5A, a cross-section view of helical skin cooling passages 358 and main body core 354 is illustrated, in accordance with various embodiments. Helical skin cooling passages 358 may be spaced apart from main body core 354. With reference to FIG. 5B, a cross-section view of a plurality of helical skin cooling passages 558 and a main body core 554 is illustrated, in accordance with various embodiments. In various embodiments, the cross-sectional shape of helical skin cooling passages 558 and/or main body core 554 may be elliptical, circular, racetrack, or any other suitable geometry. In various embodiments, the plurality of helical skin cooling passages 558 may comprise any number of helical skin cooling passages 558.

With reference to FIG. 6, a method 600 of manufacturing an airfoil is provided, in accordance with various embodiments. Method 600 includes forming a helical skin cooling passage (step 610). Method 600 includes forming a main body core (step 620).

With combined reference to FIG. 3A and FIG. 5, step 610 may include forming helical skin cooling passages 358 to extend between ID end 132 (see FIG. 2) of airfoil 300 and OD end 342 of airfoil 300. Step 620 may include forming main body core 354 to extend between ID end 132 (see FIG. 2) of airfoil 300 and OD end 342 of airfoil 300. As described above, helical skin cooling passages 358 may be formed to surround main body core 354. In various embodiments, step 610 may further include forming protrusion 402 (see FIG. 4B) to extend from the helical skin cooling passages 358. Forming main body core 354 and/or helical skin cooling passages 358 may be performed via any suitable manufacturing process such as via a negative manufacturing process such as electric discharge machining (EDM) for example, an additive manufacturing process, and/or a casting process.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element is intended to invoke 35 U.S.C. 112(f) unless the element is expressly recited using the phrase "means for." As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. An airfoil for a gas turbine engine, comprising:
an airfoil body having an outer diameter (OD) end extending between a leading edge and a trailing edge and having an inner diameter (ID) end located opposite the airfoil body from the OD end, the airfoil body defining:
a helical skin cooling passage extending between the ID end of the airfoil and the OD end of the airfoil; and
a main body core.

2. The airfoil of claim 1, wherein the main body core extends between the ID end of the airfoil and the OD end of the airfoil.

3. The airfoil of claim 2, wherein the helical skin cooling passage thermally shields the main body core, wherein, optionally, the helical skin cooling passage surrounds the main body core.

4. The airfoil of any preceding claim, wherein the helical skin cooling passage is located at the leading edge of the airfoil body.

5. The airfoil of any preceding claim, wherein the airfoil body further defines a protrusion disposed on the helical skin cooling passage, wherein, optionally, the protrusion is configured to increase a rate of heat transfer from cooling air within the helical skin cooling passage to the airfoil body, wherein, optionally, the helical skin cooling passage comprises a width and the protrusion comprises a height, wherein the height is less than the width.

6. The airfoil of any preceding claim, wherein the OD end is disposed at a radially outer edge of the airfoil body.

7. An airfoil for a gas turbine engine, comprising:
an airfoil body having an outer diameter (OD) end extending between a leading edge and a trailing edge and having an inner diameter (ID) end located opposite the airfoil body from the OD end, the airfoil body defining:
a helical skin cooling passage extending between the ID end of the airfoil and the OD end of the airfoil; and
a protrusion disposed on the helical skin cooling passage.

8. The airfoil of claim 7, wherein the protrusion is configured to increase a rate of heat transfer from cooling air within the helical skin cooling passage to the airfoil body.

9. The airfoil of claim 7 or 8, wherein the helical skin cooling passage comprises a width and the protrusion comprises a height, wherein the height is less than the width.

10. The airfoil of claim 7, 8 or 9, wherein the airfoil body further defines a main body core.

11. The airfoil of claim 10, wherein the helical skin cooling passage thermally shields the main body core, wherein, optionally, the helical skin cooling passage surrounds the main body core.

12. The airfoil of any of claims 7 to 11, wherein the helical skin cooling passage is located at the leading edge of the airfoil body.

13. The airfoil of any of claims 7 to 12, wherein the OD end is disposed at a radially outer edge of the airfoil body, and / or wherein, optionally, the helical skin cooling passage comprises at least one of a circular, elliptical, or racetrack geometry.

14. A method of manufacturing an airfoil, comprising:
forming a helical skin cooling passage to extend between an inner diameter (ID) end of the airfoil and an OD end of the airfoil; and
forming a main body core to extend between the ID end of the airfoil and the OD end of the airfoil, wherein the helical skin cooling passage surrounds the main body core.

15. The method of claim 14, further comprising forming a protrusion to extend from the helical skin cooling passage.
